# EUROPÄISCHE PATENTANMELDUNG

(11) **EP 0 873 850 A2**
(43) Veröffentlichungstag der Anmeldung: **28.10.1998**
(21) Anmeldenummer: 98104862.2
(22) Anmeldetag: 18.03.1998
(51) Int. Cl.: B29C 70/76, E06B 1/26

(54) **Verfahren zum Anbringen eines Abdeckrahmens aus aushärtbarem Giessmaterial an der Aussenseite einer Türfüllung**

(30) Priorität: 25.04.1997 DE 19717508
(71) Anmelder: F.E.K.- Haustürfüllungen GmbH, 04617 Rositz (DE)
(72) Erfinder: Elsner, Frank, 33649 Bielefeld (DE)
(74) Vertreter: Füssel, Michael, Dipl.-Ing.

(57) **Zusammenfassung**

Die vorliegende Erfindung betrifft ein Verfahren zum Anbringen eines Abdeckrahmens (12) aus aushärtbarem Gießmaterial an der Außenseite einer Türfüllung (1), in dem zunächst der Lichtausschnitt (2) aus der Türfüllung (1) herausgenommen wird und dann unter Mitverwendung der Umrandung (4) des Lichtausschnitts (2) der Abdeckrahmen (12) an die Türfüllung (1) angegossen wird.

## Beschreibung

Die Erfindung betrifft ein Verfahren nach Oberbegriff von Anspruch 1.

Derartiges Verfahren ist allgemein bekannt.

Zu diesem Zweck wird auf die Türfüllung eine Hohlform aufgelegt, die das Negativprofil des Abdeckrahmens hat. Anschließend muß, um das Gießmaterial in die Hohlform einfüllen zu können, nach Auflegen einer Bohrschablone die Hohlform durch Bohrlöcher zugänglich gemacht werden. Anschließend erfolgt das Ausgießen der Hohlform. Damit ist der Abdeckrahmen, der zumeist als stilistischer Ornamentrahmen ausgeführt ist, an der Türfüllung angebracht.

Da der Abdeckrahmen üblicherweise an der Außenseite der Türfüllung sitzt, muß als nächstes noch der Lichtausschnitt hergestellt werden. Dies geschieht durch z.B. Fräsen.

Zu diesem Zweck wird die Türfüllung samt angegossenem Abdeckrahmen mit der zukünftigen Türaußenseite nach unten auf den Werktisch einer Fräsmaschine gelegt. Hierbei ergibt sich das Problem, daß der angegossene Abdeckrahmen eine exakte Führung auf dem Werktisch der Fräsmaschine nicht zuläßt. Es müssen daher Abstandshalter vorgesehen werden, um einen unmittelbaren Kontakt zwischen dem Abdeckrahmen und dem Werktisch zu vermeiden.

Ein weiteres Problem ergibt sich dann daraus, daß die Eintauchtiefe des Fräsers exakt bis an die Kontaktfläche des Abdeckrahmens mit der Außenseite der Türfüllung eingestellt werden muß. Da nämlich der Abdeckrahmen den Glaseinsatz, der in den Lichtausschnitt einzusetzen ist, spaltfrei überdecken muß, muß der Glaseinsatz unmittelbar hinter dem Abdeckrahmen zu liegen kommen.

Ferner erfordert die Bewegungssteuerung des Fräsers eine exakte Abstimmung mit dem Verlauf des (nicht sichtbaren) Abdeckrahmens, da der Lichtausschnitt innerhalb der Breite des Abdeckrahmens enden muß.

Sofern es dann gelungen ist, die Ausnehmung für den Lichtausschnitt herzustellen, besteht noch das Problem, daß der Verschnitt am Abdeckrahmen kleben kann. Dies erfordert zusätzliche Arbeitsgänge.

Zwar läßt sich durch vorherige Aufbringung eines Trennmittels das Anhaften des Verschnitts am Abdeckrahmen vermeiden, dies würde jedoch dem prinzipiellen Erfordernis einer festen Verbindung zwischen Abdeckrahmen und Füllung widersprechen.

Die feste Verbindung zwischen Abdeckrahmen und Füllung ist unter anderem auch aus Gründen der Aufbruchsicherheit notwendig. Man strebt daher stets eine möglichst feste Verbindung zwischen Abdeckrahmen und Türfüllung an.

Aus der DE 32 05 113 A1 ist ein Verfahren zum Umgießen des Randes einer Werkstückplatte mit einem Kunstharz bekannt, welches über separate Bohrungen an dem Randbereich der Werkstückplatte verankert wird. Mit diesem Verfahren lassen sich lediglich Randverstärkungen herstellen, deren Dicke die Dicke der Werkstückplatte nicht übersteigt. Für die Herstellung von übergreifenden Ornamentrahmen ist derartiges Verfahren nicht geeignet. Die AT 253 765 offenbart ein Verfahren zum Umgießen des Randes einer Werkstückplatte mit einem Kunstharz, welches unter Vakuumwirkung zur besseren Verankerung in den Randbereich der Werkstückplatte hineingesaugt werden soll. Dieses Verfahren mag für poröse Materialien funktionieren. Für die Anwendung an Türfüllungen ist es nicht geeignet, weil diese naturgemäß nicht porös sein dürfen.

Es ist daher Aufgabe der vorliegenden Erfindung, das bekannte Verfahren zur Anbringung gegossener Abdeckrahmen an Türfüllungen unter Vermeidung von Ausschußproduktion fertigungstechnisch zu vereinfachen und trotzdem die Verbindungsfestigkeit zwischen Abdeckrahmen und Türfüllung zu erhöhen.

Diese Aufgabe wird gelöst mit den Merkmalen des Anspruchs 1.

Aus der Erfindung ergibt sich der Vorteil, daß in einem einzigen Arbeitsgang beim Gießen des Abdeckrahmens eine dreidimensionale feste Verankerung des Abdeckrahmens einerseits an der Außenseite der Türfüllung und andererseits an der Umrandung des Lichtausschnitts erfolgt. Der Abdeckrahmen wird nämlich nicht nur an der Außenseite der Türfüllung befestigt, sondern zugleich auch um die Ecke herum bis in den Lichtausschnitt hineingezogen. Daher wird die Verbindungsfestigkeit zwischen Abdeckrahmen und Türfüllung erhöht und zugleich das Widerstandsmoment des Abdeckrahmens gegen Aufbruchversuche deutlich erhöht.

Da der Abdeckrahmen sich bis in die Umrandung des Lichtausschnitts hinein erstreckt und dort zusätzlichen Halt findet, läßt er sich selbst unter äußerster Gewalteinwirkung nicht mehr so leicht von der Türfüllung lösen. Damit bleibt aber die Fuge zwischen der Umrandung des Lichtausschnitts und dem darin befindlichen Glaseinsatz unzugänglich, die Aufbruchsicherheit der Tür ist verbessert.

Üblicherweise bestehen derartige Abdeckrahmen aus PUR-Harz. Diesem Harz ist eine hervorragende Klebeigenschaft an allen zur Herstellung von Türfüllungen verwendeten Kunststoffen zu eigen. Berücksichtigt man ferner, daß der Kern derartiger Türfüllungen aus aufgeschäumten PUR besteht, so kann mit dem vorliegenden Verfahren das Gießmaterial auch in die Poren des PUR-Schaums eindringen, welcher den Kern der Türfüllung bildet.

Es erfolgt daher zusätzlich zum Klebeffekt der an den gemeinsamen Grenzflächen vorliegenden Materialien - PUR-Schaum sowie PUR-Harz - auch ein tiefes Eindringen des PUR-Harzes in die Poren des PUR-Schaums, wo sich das ausgehärtete PUR-Harz über eine vergrößerte Fläche mit den Wandungen der Poren verbindet und über die Vielzahl der stochastisch ausgerichteten Schaumporen eine nur unter Zerstörung des PUR-Schaums lösbare Verbindung eingeht. In den einzelnen vollgelaufenen Poren des PUR-Schaums verkrallt sich daher, zumindest im Kern der Türfüllung, das PUR-Harz des Abdeckrahmens nachhaltig.

Von wesentlicher Bedeutung ist, daß zunächst die Öffnung für den Lichtausschnitt aus der Türfüllung herausgenommen wird, bevor der Abdeckrahmen an die Türfüllung und zugleich an die Umrandung des Lichtausschnitts angegossen wird.

Die Erfindung geht daher den zum Stand der Technik umgekehrten Weg. Erst durch diese Erkenntnis läßt sich allerdings die zusätzliche Verankerung des Gießmaterials im Schaumkern derartiger Türfüllungen erzielen.

Dabei ist die Erfindung keinesfalls auf Türfüllungen mit Schaumkern beschränkt. Bei Türfüllungen homogenen Querschnitts wird bereits durch die dreidimensionale Verankerung des Abdeckrahmens am Lichtausschnitt und im schmalen Randbereich um den Lichtausschnitt herum die Aufbruchsicherheit deutlich erhöht.

Durch die vorausgehende Anbringung des Lichtausschnitts wird die innenliegende Umrandung des Lichtausschnitts erst freigelegt, welche für die Verankerung des Abdeckrahmens dort notwendig ist.

Verwendet man eine Gießform, welche eine zu bildende Falz für den Glaseinsatz ausspart, so daß die Höhlung unter Freilassung einer Falz für den Glaseinsatz vollgegossen werden kann, bietet dies den zusätzlichen Vorteil, daß der Glaseinsatz auf dem ausgehärteten PUR-Harz, und nicht wie bisher, auf dem relativ weichen PUR-Schaum der Türfüllung festgeklotzt werden kann. Dieser Vorteil wird dadurch erreicht, daß der Falz für den Glaseinsatz mit einem vorbestimmten Abstand zum Rand des Lichtausschnitts endet. Dieser vorbestimmte Abstand wird dann durch das in die Höhlung einlaufende Gießharz gefüllt. Der Falz bleibt frei.

Das vorliegende Verfahren kann mit Einweggießformen Anwendung finden.

Vorteilhaft sind mehrfach verwendbare Gießformen. Zu diesem Zweck wird vorgeschlagen, die Gießform in einer zur Außenseite der Türfüllung parallelen Ebene zu teilen, wobei die äußere Gießform unmittelbar auf die Außenseite der Türfüllung aufgelegt wird. In der äußeren Gießform befindet sich eine ringförmige Ausnehmung, welche das Negativprofil des Abdeckrahmens aufweist. Die Ausnehmung ist so positioniert, daß sie den Rand des Lichtausschnitts zu beiden Seiten überdeckt.

Die innere Gießform greift dann die Kontur des Glaseinsatzes auf und endet mit Abstand vor der Umrandung des Lichtausschnitts. Die innere Gießform wird in den vorbereiteten Lichtausschnitt eingelegt und dichtend auf die äußere Gießform aufgelegt.

Ggfs. werden die Gießformen vorher mit Trennmittel versehen, um nach dem Aushärten des PUR-Harzes problemlos abgenommen werden zu können.

Bildet man die innere Gießform oder die äußere Gießform transparent aus, so läßt sich das Befüllen der Höhlung optisch kontrollieren. Dies dient der Vermeidung von Lunkern infolge zu geringer Gießharzmengen.

Da zweckmäßigerweise innere und äußere Gießform möglichst dicht aneinander liegen sollen, wird vorgeschlagen, die jeweiligen Kontaktflächen hochglatt zu bearbeiten.

Für diesen Fall kann zusätzlich vorgesehen sein, in zumindest eine der Gießformen einen Luftabsaugkanal einzubringen, der in der hochglatten Kontaktfläche endet. Es läßt sich dann durch Erzeugung eines Vakuums zwischen innerer und äußerer Gießform ein dichter Kontakt gewährleisten.

Will man den Verankerungseffekt des Abdeckrahmens in der Umrandung des Lichtausschnitts noch verstärken, wird zusätzlich vorgeschlagen, den Kern der Türfüllung so auszunehmen, daß die nach außen weisende Kante des Lichtausschnitts von der Ausnehmung hintersprungen wird. Auf diese Weise läßt sich nicht nur zusätzliches Gießmaterial zur Stabilitätserhöhung mit dem Abdeckrahmen verbinden, darüber hinaus erfolgt neben dem mikroskopischen Kralleneffekt auf Basis der Schaumporen ein makroskopischer Hintergreifeffekt.

Darüber hinaus kann es zweckmäßig sein, einen Verbindungsanker zur Verstärkung des Abdeckrahmens mit einzugießen. Dieser kann in bevorzugter Weiterbildung auch in den hinterspringenden Bereich eingreifen.

Um einer schnellen gleichmäßigen Befüllung Rechnung zu tragen, wird weiterhin vorgeschlagen, die Türfüllung horizontal zu legen. Eine gewisse Neigung um bis zu etwa 3° kann das Fließverhalten positiv beeinträchtigen.

Im folgenden wird die Erfindung anhand von Ausführungsbeispielen näher erläutert. Es zeigen
- Fig.1: ein erstes Ausführungsbeispiel der Erfindung mit offener Gießform,
- Fig.2: ein weiteres Ausführungsbeispiel der Erfindung mit geschlossener Gießform,
- Fig.3: ein Ausführungsbeispiel der Erfindung mit geteilter Gießform,
- Fig.4: ein Ausführungsbeispiel der Erfindung mit geteilter Gießform und eingelegtem Anker.

Sofern im folgenden nichts anderes gesagt ist, gilt die folgende Beschreibung stets für alle Figuren.

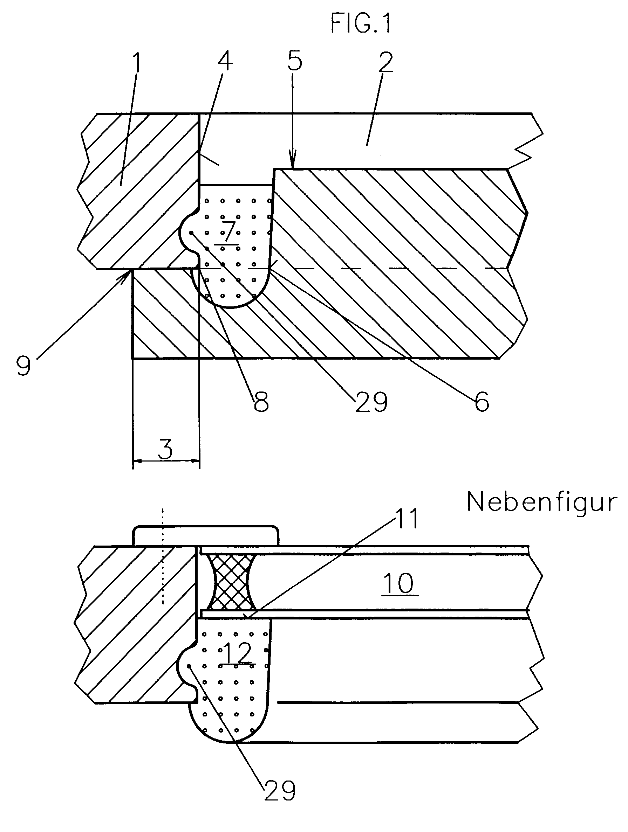

Fig.1 zeigt die Erfindung an einem einfachen Ausführungsbeispiel. Aus der Türfüllung 1 ist bereits der Lichtausschnitt 2 herausgenommen worden.

In diesem Fall besteht die Türfüllung aus einem durch und durch homogenen Material.

Die Türfüllung ist in die horizontale Lage gebracht. Die Unterseite der Türfüllung ist die zukünftige Außenseite. An dieser Außenseite soll der Abdeckrahmen angebracht werden. Der Abdeckrahmen verläuft in einem schmalen Randbereich 3 um den Lichtausschnitt 2 herum und erstreckt sich soweit in den Lichtausschnitt 2 hinein, daß er die Umrandung 4 des Lichtausschnitts 2 auch in die Öffnung hinein überdeckt. Dies wird als Überdeckungsbereich 5 bezeichnet.

Der Abdeckrahmen besteht aus einem aushärtbaren Gießmaterial, welches grundsätzlich gemäß dieser Erfindung nicht separat sondern integral an die Türfüllung 1 angegossen werden soll.

Zu diesem Zweck muß eine Gießform 6 erstellt werden, die eine Höhlung 7 aufweist, in welcher durch Vollgießen mit dem aushärtbaren Gießmaterial der Abdeckrahmen dann entsteht.

Wesentlich ist nun, daß die Höhlung 7 unter Mitverwendung des schmalen Randbereichs 3 sowie unter Mitverwendung der sich an den schmalen Randbereich 3 anschließenden Umrandung 4 des Lichtausschnitts 2 die Höhlung 7 gebildet wird. Dabei kommt es lediglich auf das Herumziehen der Höhlung um die gemeinsame Kante 8 an, an der sich der schmale Randbereich 3 und die Umrandung 4 berühren.

Es ist also nicht erforderlich, die Höhlung über die gesamte Höhe der Türfüllung 1 zu erstrecken.

Es genügt, einen schmalen Bereich der Umrandung 4 an der Verankerung des späteren Abdeckrahmens zu beteiligen.

Durch diese Maßnahmen wäre die im Querschnitt geschlossene Höhlung 7 auf der Seite der Türfüllung praktisch gebildet. Der verbleibende Umfangsbereich der Höhlung - im Querschnitt gesehen - wird dann von einer separaten Negativform gebildet, welche mit dem Negativprofil des Abdeckrahmens versehen ist und vom außen liegenden Ende 9 des schmalen Randbereichs 3 konkav um den schmalen Randbereich 3 sowie den an der Höhlung 7 beteiligten Bereich der Umrandung 4 mit Abstand herum verläuft, soweit, daß die Höhlung 7 dann bis zu vorgegebener Höhe mit Gießmaterial gefüllt werden kann.

Die Gießform gemäß Fig.1 ist nach oben hin offen. Es handelt sich um eine Rinne. Es kann somit das auszuhärtende Gießmaterial in die vom schmalen Randbereich 3, der Umrandung 4 sowie der Negativkonkaven begrenzte Rinne eingefüllt werden. Das Gießmaterial wird sich bei exakt horizontaler Ausrichtung der Türfüllung 1 so nivellieren, daß anschließend der Glaseinsatz in den Lichtausschnitt 2 eingesetzt werden kann.

Diesen Fall zeigt die Nebenfigur zu Fig.1. Der Glaseinsatz 10 liegt mit seiner Außenfläche an der Rückenfläche 11 des Abdeckrahmens 12 an, so wie dieser durch Ausgießen der Gießform 6 gemäß Fig.1 erstellt wurde.

Im Falle der Fig.1 wurde die Gießform vorher mit Trennmittel beschichtet, um nach Aushärten des Gießmaterials den Gußkasten mitsamt der Negativkonkaven leicht abnehmen zu können. Dies muß jedoch nicht zwingend so sein.

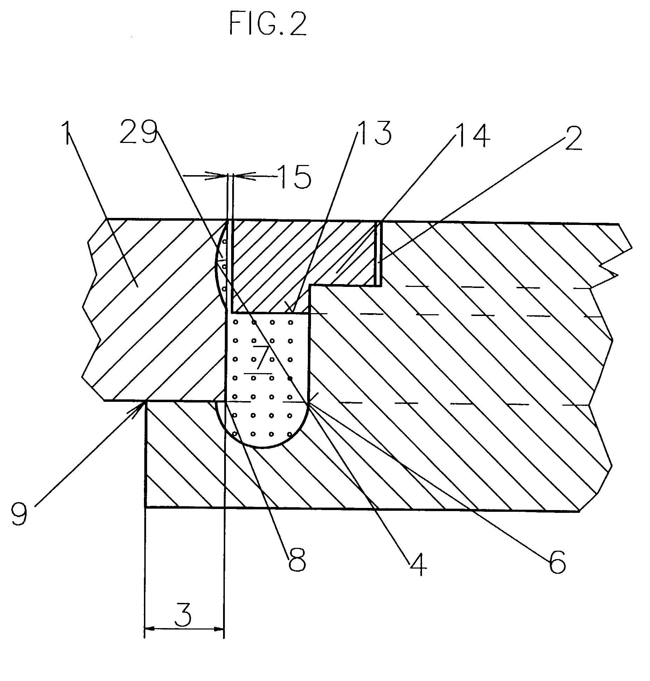

Fig.2 zeigt eine Weiterbildung, bei welcher die Gießform 6 einen zu bildenden Falz 13 für den Glaseinsatz 10 ausspart, so daß die Höhlung 7, die an sich dieselben Merkmale wie die Höhlung 7 gemäß Fig.1 aufweist, unter Freilassung des Falzes für den Glaseinsatz 10 vollgegossen werden kann.

Zu diesem Zweck ist die Gießform so geteilt, daß der hinterschnittene Bereich, welcher den Falz 13 begrenzt, von einem separaten Einsatzstück 14 der gesamten Gießform 6 gebildet wird. Das Einsatzstück 14 besitzt in demjenigen Bereich, an dem es mit dem aushärtbaren Gießmaterial in Berührung kommt, die mit dem Glaseinsatz 10 übereinstimmende Aussenkontur.

Bei Befüllen der Höhlung 7 wird daher ein der Außenkontur des Glaseinsatzes 10 identisches Profil ausgespart, so daß der Glaseinsatz 10 anschließend formschlüssig in die Aussparung eingesetzt werden kann.

Ferner zeigt Fig.2, daß das Einsatzstück 14 mit einem gewissen Abstand 15 vor der Umrandung 4 des Lichtausschnitts 2 endet. Es verbleibt demnach ein geringer Spalt zwischen dem Einsatzstück 14 und der Umrandung 4. Der Spalt wird von den zueinander parallel verlaufenden Wänden der Umrandung 4 sowie des Einsatzstücks 14 begrenzt. Beim Ausgießen der so entstandenen Höhlung kann daher das Gießmaterial, nachdem es die rinnenartige Höhlung 7 gefüllt hat, noch ein Stück in dem gemeinsamen Spalt zwischen Umrandung 4 und Einsatzstück 14 steigen. Hierdurch wird ein gewisser statischer Druck aufgebaut, der zur Vermeidung von Unterfüllung der Höhlung 7 dienen kann.

Wesentlich an beiden Ausführungsbeispielen gemäß Fig.1 und 2 ist die rinnenartige Höhlung, die prinzipiell nach oben offen ist. In den Ausführungsbeispielen 3 und 4 ist die Höhlung 7 jeweils im Querschnitt vollständig geschlossen.

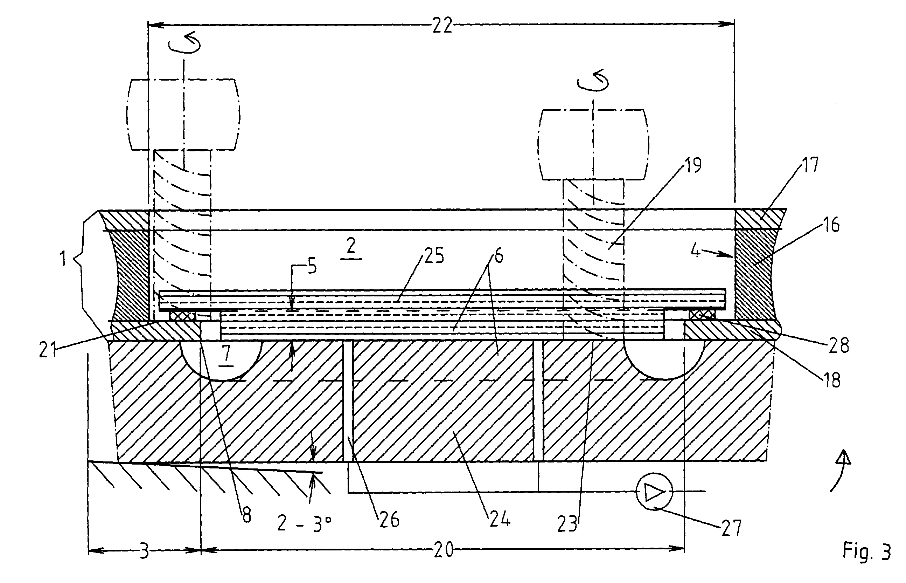

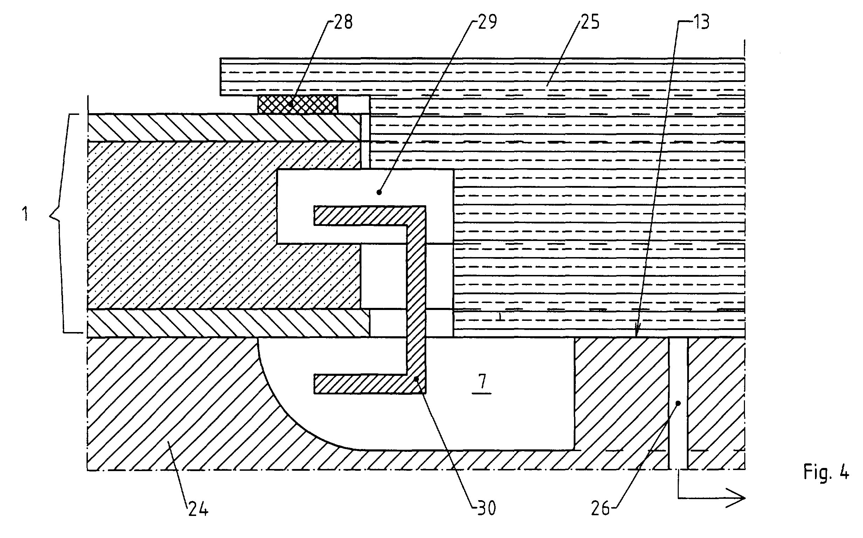

Ergänzend zum bisher Gesagten zeigen die Fig.3 und 4 Türfüllungen 1, die dreischichtig aufgebaut sind. Ein zentraler Bereich, zumeist ein Schaumkern 16 aus PUR-Schaum, ist oben und unten von jeweils einer Deckplatte 17,18 abgedeckt.

Die Deckplatte besteht zweckmäßigerweise aus Kunststoff. Geeignetes Material kann auch z.B. Aluminium sein.

Mit einem Fräser 19 wird nun aus der Türfüllung 1 zunächst der Lichtausschnitt 2 herausgenommen. Dabei taucht der Fräser in zwei Arbeitsschritten auf zwei verschiedene Tiefen ein. In einem ersten Arbeitsschritt wird der Fräser 19 so tief eingetaucht, daß er die gesamte Dicke der Türfüllung 1 durchstößt und einen kleinen Lichtausschnitt 20 aus der unteren Deckplatte 18 heraustrennt.

Die untere Deckplatte 18 entspricht der Anbringungsseite des Abdeckrahmens.

Danach taucht der Fräser 19 nur noch so tief in die Türfüllung 1 ein, daß er innerhalb der Türfüllung endet, bevor die untere Deckplatte 18 beginnt.

Zweckmäßigerweise liegt jedoch das untere Ende 21 des Fräsers 19 im Bereich der in die Türfüllung 1 weisenden Oberfläche der unteren Deckplatte 18.

Dies bietet den Vorteil, daß eine genau definierte Grenzfläche entsteht, bis zu der der Schaumkern 16 herausgearbeitet wird.

Nun wird der Fräser 19 aus dem verbleibenden Schaumkern mit oberer Deckplatte einen großen Lichtausschnitt 22 aus der Türfüllung 1 heraustrennen. Aus der Richtung vom kleinen Lichtausschnitt 20 gesehen erweitert dieser sich in den grossen Lichtausschnitt 22 von der Anbringungsseite des Abdeckrahmens zur gegenüberliegenden Seite der Türfüllung 1.

Gemeinsam ist den Fig.2 bis 4, daß der Abdeckrahmen jeweils einstückig mit einer mehrfach zu verwendenden Gießform angegossen wird, welche zugleich an dem angegossenen Abdeckrahmen den Falz 13 für den Glaseinsatz ausspart. Zu diesem Zweck ist bei den Ausführungsbeispielen gemäß Fig.2 und 3 die Gießform in einer zur Außenseite parallelen Ebene geteilt in eine äußere Gießform 24 und eine innere Gießform 25.

Die äußere Gießform 24 enthält in einer Rinne das Negativprofil des Abdeckrahmens und wird dicht an die spätere Außenseite der Türfüllung 1 angelegt.

Hier endet die äußere Gießform 24 praktisch in der äußeren Ebene der Türfüllung 1.

Anschließend wird die innere Gießform 25, deren Abmessungen kleiner als die Abmessungen des kleinen Lichtausschnitts 20 sind, auf die äußere Gießform 24 aufgelegt. Innere und äußere Gießform sind an den sich zugewandten Flächen so fein bearbeitet, daß ein Eindringen des Gießmaterials in die Fuge nicht stattfindet. Die innere Gießform weist nun im unmittelbaren Nachbarbereich zur äußeren Gießform 24 die Kontur des Glaseinsatzes 10 auf und endet mit Abstand vor der Umrandung 4 des Lichtausschnitts 2.

Auf diese Weise wird beim Vollgießen der Höhlung 7 eine Falz 13 für den Glaseinsatz 10 ausgespart, welche diesen bündig aufnimmt.

Die dichte Anlage zwischen innerer und äußerer Gießform wird im vorliegenden Fall unterstützt durch Absaugkanäle 26, die in der Grenzebene zwischen innerer und äußerer Gießform enden.

Diese Absaugkanäle 26 sind an eine Saugpumpe 27 angeschlossen. Durch Evakuierung entsteht der erforderliche Unterdruck, so daß innere und äußere Gießform fest gegeneinander gehalten werden.

Ergänzend zum bisher Gesagten zeigen die Fig.3 und 4, daß die innere Gießform 25 aus transparentem Material besteht. Auf diese Weise läßt sich der Befüllungsvorgang der Höhlung 7 optisch kontrollieren. Ferner zeigen die Fig.3 und 4, daß die innere Gießform 25 den kleinen Lichtausschnitt 20 nach außen überspringt und im überspringenden Bereich unter Zwischenlage einer Dichtung 28 gegen die Türfüllung 1 dicht gehalten wird.

Dies in Kombination mit einer transparenten inneren Gießform 25 gewährleistet einen lunker- und blasenfreien Befüllungsvorgang der Höhlung 7.

Ferner zeigen Fig.3 und 4, daß die Umrandung 4 des Lichtausschnitts derart ausgespart ist, daß die Aussparung den schmalen Randbereich 3 hinterspringend umgreift.

Das Ausmaß dieses Hintersprungs kann zwischen wenigen Millimetern (siehe Fig.3) und einigen Zentimetern (siehe Fig. 4) liegen.

In jedem Fall erfolgt durch den Hintersprung ein Umgreifen des fertig angegossenen Abdeckrahmens, so daß dieser mit einer ringförmigen Verankerung fest in dem Schaumkern 16 der Türfüllung 1 sitzt.

Darüber hinaus zeigt Fig.4 eine Weiterbildung, bei der im hintersprungenen Bereich 29 ein Verbindungsanker 30 mit eingegossen ist, der den hintersprungenen Bereich 29 mit dem Abdeckrahmen 12 verbindet.

Bildet man den hintersprungenen Bereich 29, so wie in Fig.4 gezeigt, etwa in der zentralen Mitte des Schaumkerns 16 aus, empfiehlt es sich, die innere Gießform auf der oberen Deckplatte 17 unter Zwischenlage einer Dichtung 28 abzulegen. Auf diese Weise kann der Verbindungsanker 30 weit umgreifend um die Kante 8 herumgeführt und tief im Schaumkern 16 verankert werden.

Während die Fig.1,2 und 4 das Befüllen der Höhlung mit praktisch horizontal ausgerichteter Türfüllung 1 zeigen, zeigt Fig.3 hiervon abweichend, daß die Türfüllung 1 um einen kleinen Winkel zwischen etwa 2° bis 3° zur Horizontalen geneigt werden kann. Dies kann während des Befüllens geschehen und nutzt das Fließverhalten des Gießmaterials zum Zwecke einer blasen- und lunkerfreien Befüllung aus.

### Bezugszeichenaufstellung:

- 1: Türfüllung
- 2: Lichtausschnitt
- 3: schmaler Randbereich
- 4: Umrandung
- 5: Überdeckungsbereich
- 6: Gießform
- 7: Höhlung
- 8: Kante
- 9: außenliegendes Ende des schmalen Randbereichs
- 10: Glaseinsatz
- 11: Rückenfläche
- 12: Abdeckrahmen
- 13: Falz
- 14: Einsatzstück
- 15: Abstand
- 16: Schaumkern
- 17: obere Deckplatte
- 18: untere Deckplatte
- 19: Fräser
- 20: kleiner Lichtausschnitt
- 21: unteres Ende
- 22: großer Lichtausschnitt
- 23: zur Außenseite parallele Ebene
- 24: äußere Gießform
- 25: innere Gießform
- 26: Absaugkanal
- 27: Saugpumpe
- 28: Dichtung
- 29: hintersprungener Bereich
- 30: Verbindungsanker

## Patentansprüche

1. Verfahren zum Anbringen eines Abdeckrahmens (12) aus aushärtbarem Gießmaterial an der Außenseite einer Türfüllung (1) im schmalen Randbereich (3) um einen, mit einem Glaseinsatz (10) zu versehenden Lichtausschnitt (2) herum, so, daß der angebrachte Abdeckrahmen (12) die Umrandung (4) des Lichtausschnitts (2) zu beiden Seiten überdeckt, **dadurch gekennzeichnet,** daß
1.0 zunächst die Öffnung für den Lichtausschnitt (2) aus der Türfüllung (1) herausgenommen wird und daß dann
1.1 unter Mitverwendung des schmalen Randbereichs (3) sowie
1.2 der sich hieran nach innen anschließenden Umrandung (4) des Lichtausschnitts (2) eine
1.3 im Querschnitt rinnenartig oder vollständig geschlossene und in Umfangsrichtung des Abdeckrahmens (12) verlaufende Höhlung (7) einer Gießform (6) gebildet wird, und daß
1.4 der Abdeckrahmen (12) dann durch Befüllen der Höhlung (7) mit Gießmaterial an die Außenseite der Türfüllung (1) und zugleich an die Umrandung (4) des Lichtausschnitts (2) angegossen wird.

2. Verfahren nach Anspruch 1, **dadurch gekennzeichnet,** daß die Gießform (6) einen zu bildenden Falz (13) für den Glaseinsatz (10) ausspart, und daß die Höhlung (7) unter Freilassung eines Falzes (13) für den Glaseinsatz (10) vollgegossen wird.

3. Verfahren nach Anspruch 2, **dadurch gekennzeichnet,** daß der Abdeckrahmen (12) einstückig mit einer mehrfach zu verwendenden Gießform (6) angegossen wird, die in einer zur Außenseite parallelen Ebene (23) in eine äußere Gießform (24) und in eine innere Gießform (25) geteilt ist, wobei die äußere Gießform (24) das Negativprofil des Abdeckrahmens (12) enthält und dicht an die Außenseite der Türfüllung (1) angelegt wird, und wobei die innere Gießform (25), welche die Kontur des Glaseinsatzes (10) hat und mit Abstand vor der Umrandung (4) des Lichtausschnitts (2) endet, von der Füllungsseite her dicht auf die äußere Gießform (24) aufgelegt wird.

4. Verfahren nach Anspruch 3, **dadurch gekennzeichnet,** daß das Befüllen der Höhlung (7) durch Verwendung einer transparenten inneren Gießform (25) optisch kontrolliert wird.

5. Verfahren nach Anspruch 3 oder 4, **dadurch gekennzeichnet,** daß innere Gießform (25) und äußere Gießform (24) durch ein dazwischen erzeugtes Vakuum (26,27) gegeneinander fixiert werden.

6. Verfahren nach einem der Ansprüche 1 bis 5, **dadurch gekennzeichnet,** daß die Umrandung (4) des Lichtausschnitts (2) derart ausgespart ist, daß die Aussparung den schmalen Wandbereich (3) hinterspringend umgreift.

7. Verfahren nach Anspruch 6, **dadurch gekennzeichnet,** daß im hintersprungenden Bereich (29) ein Verbindungsanker (30) mit eingegossen wird, der den hintersprungenen Bereich (29) mit dem Abdeckrahmen (12) verbindet.

8. Verfahren nach einem der Ansprüche 1 bis 7, **dadurch gekennzeichnet,** daß zum Befüllen der Höhlung (7) die Türfüllung (1) horizontal gelegt wird.

9. Verfahren nach einem der Ansprüche 1 bis 7, **dadurch gekennzeichnet,** daß zum Befüllen der Höhlung (7) die Türfüllung (1) in einem kleinen Winkel von bis zu etwa 3 Grad zur Horizontalen geneigt wird.

10. Verfahren nach einem der Ansprüche 1 bis 9, **dadurch gekennzeichnet,** daß die Öffnung für den Lichtausschnitt (2) in zwei Arbeitsschritten hergestellt wird, wobei ein kleiner Lichtausschnitt (20) auf der Anbringungsseite des Abdeckrahmens (12) gebildet wird, der sich in einen größeren Lichtausschnitt (22) zur gegenüberliegenden Seite der Türfüllung (1) erweitert.
